## Europäisches Patentamt

## European Patent Office

## Office européen des brevets

(19)

(11) Numéro de publication: **0 022 410 B1**

# FASCICULE DE BREVET EUROPEEN

(12)

(45) Date de publication du fascicule du brevet:
09.04.86

(51) Int. Cl.⁴: **G 01 S 13/95**, G 01 S 13/10, G 01 S 7/06

(21) Numéro de dépôt: 80401015.5

(22) Date de dépôt: 03.07.80

(54) Sondeur pour la détection et la mesure de phénomènes relatifs à l'environnement du globe terrestre.

(30) Priorité: 06.07.79 FR 7917600

(43) Date de publication de la demande:
14.01.81 Bulletin 81/2

(45) Mention de la délivrance du brevet:
09.04.86 Bulletin 86/15

(84) Etats contractants désignés:
**BE DE GB IT NL**

(56) Documents cités:
FR - A - 1 334 394
FR - A - 2 291 505
FR - A - 2 344 030
US - A - 3 702 476
US - A - 3 939 474
US - A - 3 979 752
US - A - 3 981 012

IEEE TRANSACTIONS ON MICROWAVE THEORY AND TECHNIQUES, vol. 23, no. 12, décembre 1975 NEW YORK (US) W.L. JONES et al.: "Microwave Scattering from the Ocean Surface", pages 1053-1058
IEEE NATIONAL TELECOMMUNICATIONS CONFERENCE, New Orleans, décembre 1-3, 1975, vol. 2 NEW YORK (US) J. ECKERMAN: "Meteorological Radar Facility for the Space Shuttle", pages 37.6 - 37.17

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Herbreteau, Louis, 9, rue du Caporal Van de Walle, F-91220 Bretigny-sur-Orge (FR)**

(74) Mandataire: **Mongrédien, André et al, c/o BREVATOME 25, rue de Ponthieu, F-75008 Paris (FR)**

(56) Documents cités: (suite)
IRE, INTERNATIONAL CONVENTION RECORD, vol. 9, no. 8, 20/23 mars 1961 NEW YORK (US) C.A. FOWLER et al.: "Radar Mutual Interference Problem", pages 44-50
ELECTRICAL COMMUNICATION ITT vol. 52, no. 2, 1977 NEW YORK (US) M. CASTETS: "RONSARD Meterological Radar", pages 146-151
PROCEEDINGS OF THE IEEE, vol. 57, no. 4, avril 1969 NEW YORK (US) J.W. WRIGHT: "Some Current Developments in Radio Systems for Sounding Ionospheric Structure and Motions", pages 481-486

EP 0 022 410 B1

## Description

La présente invention concerne un sondeur pour la détection et la mesure de phénomènes relatifs à l'environnement du globe terrestre. Ce sondeur s'applique notamment à l'étude de l'ionosphère et en particulier à l'étude des modifications de courte durée et de faible amplitude du gradient de la densité électronique de l'ionosphère; il peut également s'appliquer à d'autres phénomènes tels que par exemple, l'étude ou la surveillance de la houle marine.

On sait que l'ionosphère est la zone dans laquelle, sous l'influence du rayonnement solaire, une fraction des atomes et molécules qui constituent l'atmosphère terrestre, est séparée en ions positifs et en électrons négatifs. A haute altitude, l'atmosphère terrestre est très diluée et la densité des électrons est très faible. A basse altitude, l'atmosphère est bien plus dense; comme l'énergie du rayonnement solaire a été consommée à haute altitude pour l'ionisation des molécules, l'énergie résiduelle du rayonnement solaire ne suffit plus pour produire une ionisation importante; il en résulte qu'à basse altitude, l'ionosphère constitue un bouclier de protection de la surface du globe terrestre contre certains rayons ultra-violets dangereux. L'ionisation la plus importante se produit à une altitude de deux cents kilomètres environ et atteint quelques milliers d'électrons par centimètre cube. La grandeur la plus caractéristique de l'ionosphère est donc la densité électronique ou densité d'ionisation. La connaissance de cette densité à différentes altitudes permet de détecter les perturbations que subit l'ionosphère par suite d'évènements que subit le globe terrestre (des tremblements de terre, par exemple). La connaissance de cette densité électronique de l'ionosphère permet également d'étudier les perturbations que subit le soleil et, notamment, les orages magnétiques dont il est l'objet; ces perturbations se traduisent en effet, par une modification des rayonnements émis en direction de la terre. Enfin, l'ionosphère subit d'importantes variations diurnes et nocturnes et subit également des variations saisonnières dues au cycle solaire, qu'il est utile d'étudier.

On connait différents types de sondeurs qui permettent de détecter des phénomènes relatifs au globe terrestre et à son environnement, et en particulier des phénomènes relatifs à l'ionosphère Parmi ces sondeurs, l'un deux utilise le principe du radar et comprend un générateur d'ondes entretenues, modulées par des impulsions à fréquences fixes. Ces impulsions sont émises en direction de l'ionosphère ou du phénomène à détecter et les échos résultants sont captés par un récepteur qui détecte ces échos selon leur amplitude; cette détection permet, connaissant les instants d'émission d'impulsion, les instants de réception des échos de celles-ci sur le phénomène et leur fréquence, de déterminer la distance qui sépare ce phénomène de l'émetteur. En fait, une couche ionosphérique ne peut être franchie que par des ondes présentant une fréquence inférieure à une certaine fréquence critique liée à la densité électronique de cette couche. Il en résulte que les ondes émises à une fréquence prédéterminée et qui fournissent des échos à un instant connu par rapport à un instant d'émission, permettent de situer la distance d'une zone ionosphérique présentant une densité électronique correspondant à celle nécessaire à la réflexion de l'onde électromagnétique de sondage.

Un autre type connu de sondeur permet d'obtenir une meilleure connaissance de l'évolution des phénomènes étudiés et notamment des régions ionisées, par détection des faibles variations de densité électronique. Ces sondeurs, utilisent la technique du radar à effet Doppler. En effet, les variations de densité électronique de l'ionosphère, en fonction du temps, se traduisent par des décalages en fréquence des échos résultant des ondes émises en direction de l'ionosphère; ces décalages sont très faibles mais mesurables. Afin d'obtenir une bonne résolution spatiale du sondeur, il est nécessaire que les impulsions émises en direction de l'ionosphère, soient très brèves.

Aucun de ces sondeurs ne permet toutefois de réaliser en même temps une mesure de la distance des échos en fonction de la fréquence de sondage, une mesure des variations de phases, par effet Doppler, sur plus de deux fréquences fixes et une mesure des temps de propagation de groupe, de l'onde modulée émise. Cette impossibilité est particulièrement regrettable puisqu'il existe dans l'ionosphère des modifications de la densité électronique, détectables seulement par effet Doppler, d'une durée inférieure au temps d'exécution d'un sondage par rampe de fréquence.

Les Systèmes connus présentent d'autres inconvénients et notamment l'inconvénient d'être sensibles aux brouillages d'origine interne ou externe. Les brouillages d'origine interne sont essentiellement liés aux récepteurs de ces sondeurs qui sont souvent utilisés à la limite de leurs performances. Ces brouillages apparaissent dans les circuits d'antenne et dans les filtres. Le récepteur comporte un oscillateur local qui, si sa pureté spectrale n'est pas très grande, fait apparaître en sortie, une composante nuisible à la pureté spectrale de l'information Doppler ainsi qu'à la dynamique du récepteur. Les filtres des fréquences intermédiaires et en particulier ceux qui déterminent la largeur de bande du récepteur, ne présentent pas en général une réponse en phase convenable, ce qui entraîne une déformation des impulsions d'échos. Il en résulte l'apparition de rebonds constituant des faux échos et limitant considérablement le pouvoir discriminateur du sondeur. Les brouillages d'origine externe sont des interférences provoquées par des émissions dans la gamme des radio-fréquences. Dans le cas des mesures Doppler, ces interférences limitent le choix des fréquences de fonctionnement. Il est possible d'éviter ces interférences en utilisant des aériens directifs et à large bande, de coût très élevé. Lorsque le sondeur est de type à "rampe de fréquences", les fréquences d'émissions sont figées, si bien que le problème posé par les interférences est difficile à résoudre.

Les sondeurs décrits plus haut sont par exemple ceux qui sont décrits dans la revue IEEE—National Telecommunications Conference—New-Orleans—December 1—3—1975—volume 2—pages 37.11 à 37.15 et dans le brevet US n° 3 981 012.

L'invention a pour but de remédier aux inconvénients de ces sondeurs et notamment de réaliser un sondeur qui utilise simultanément les techniques de détection d'amplitudes et de phases, qui présentent une grande immunité aux signaux parasites, qui ne nécessitent pas l'utilisation d'antennes directives et qui permet, grâce à l'utilisation simultanée de la détection d'amplitudes et de la détection de phases et de temps de groupe, de détecter simultanément la présence d'un phénomène et les perturbations instantanées que subit ce phénomène. C'est ainsi, par exemple, que le sondeur de l'invention permet de déterminer simultanément le profil de la répartition de la densité électronique de l'ionosphère, en fonction de la hauteur, ainsi que les variations instantanées de cette densité. Il permet également de déterminer la distance de la houle marine.

L'invention a pour objet un sondeur pour la détection et la mesure de phénomènes relatifs à l'environnement du globe terrestre, comprenant une voie (1) d'émission d'ondes électromagnétiques en direction du phénomène à détecter et à mesurer, et une voie (2) de réception des échos de ces ondes, sur ce phénomène,

— la voie d'émission (1) comprenant des moyens (3) reliés à une horloge (20) pour produire des ondes électromagnétiques entretenues, à fréquences réglables fixes et à fréquences réglables progressives selon une rampe de fréquences, des moyens (4) pour moduler les ondes entretenues à fréquences réglables fixes et à fréquences progressives réglables, par des impulsions de récurrence réglable, de sorte qu'après modulation, les impulsions d'ondes entretenues à fréquences progressives réglables sont intercalées entre les impulsions d'ondes entretenues de fréquences fixes réglables, un émetteur (5) émettant les impulsions d'ondes électromagnétiques ainsi modulées, les moyens de modulation (4) comprenant un générateur (15) d'impulsions de forme gaussienne, à récurrence réglable, dont une sortie est reliée à une entrée d'un modulateur (17) qui reçoit les ondes électromagnétiques sur une autre entrée, une sortie de ce modulateur étant reliée à une entrée de l'émetteur (5), et un circuit logique (21) de synchronisation du générateur (15),

— la voie de réception comprenant un récepteur (8) recevant les impulsions écho des impulsions d'émission renvoyées par le phénomène et présentant un canal (10) de réception à fréquence d'accord réglable, des moyens (11) dont une entrée est connectée en sortie du récepteur (8) pour détecter par effet Doppler les phaees des impulsions échos des impulsions d'émission d'ondes entretenues à fréquences fixes réglables, et des moyens (13) dont une entrée est connectée en sortie du récepteur (8) pour détecter les amplitudes des impulsions d'échos, la voie de réception (2) comprenant en outre un dispositif (24) de commande automatique de gain en fonction du niveau des perturbations mesuré sur l'entrée du récepteur, à la fréquence de fonctionnement, une sortie de ce dispositif étant reliée à une entrée de commande du gain du récepteur (8), une entrée de ce dispositif étant reliée à la sortie du récepteur, tandis qu'une autre entrée (28) de ce dispositif reçoit une tension de consigne pour fixer le gain du récepteur pour chaque canal de fréquence progressive réglable, en fonction du niveau des perturbations pour chaque canal,

sondeur caractérisé en ce que la voie de réception comprend en outre un détecteur de seuil (29) dont l'entrée est reliée à la sortie du récepteur, de manière à commander l'émetteur pour autoriser ou refuser l'émission sur la fréquence correspondant à chaque canal, en fonction du niveau maximal admissible de perturbations, et des moyens (16) pour incrémenter ou décrémenter, lorsque l'émission est refusée, la valeur de la fréquence progressive réglable, d'une quantité inférieure au pas de fréquence de ladite rampe, ce sondeur comprenant en outre des moyens (39) d'enregistrement des variations de phases des échos, reliés au générateur (15) et aux moyens de détection de phases (11) par l'intermédiaire d'un premier filtre (37), des moyens (42) d'enregistrement des échos, reliés au récepteur (8), et des moyens (34) d'enregistrement et de mesures des amplitudes, des phases ou du temps de propagation de groupe des impulsions d'échos, reliés soit aux moyens de détection de phases (11) par l'intermédiaire du premier filtre (37), soit aux moyens de détection (13) d'amplitudes, par l'intermédiaire d'un second filtre (38), les voies d'émission et de réception agissant dans la bande des radiofréquences entre 200 KHz et 30 MHz.

Selon une autre caractéristique de l'invention, les moyens (34) d'enregistrement et de mesures des amplitudes, des phases et du temps de propagation de groupe comprennent un oscilloscope (34) dont le circuit de brillance du spot est commandé par une sortie des moyens de détection (11, 13) et dont le circuit de balayage est synchronisé par les impulsions délivrées par le générateur d'impulsions à récurrence réglable (15).

Selon une caractéristique particulière, ledit oscilloscope est à mémoire.

Selon une autre caractéristique, le sondeur comprend en outre, au moins un filtre de Bessel (48) à fréquence centrale réglable, connecté entre la sortie du récepteur (8) et les entrées des moyens de détection (11, 13), lesdits premier et second filtres étant des filtres de Bessel, le récepteur comprenant des filtres présentant des caractéristiques le rendant apte à transmettre toutes les impulsions sans déformation.

Selon une autre caractéristique, les moyens (39) d'enregistrement et de mesures des phases des impulsions d'échos comprennent un enregistreur (40) relié aux moyens de détection de phases (11) et au générateur (15) par l'intermédiaire d'un dispositif (41) d'échantillonnage et de mémorisation des signaux de sortie de ces moyens de détection de phases.

Selon une autre caractéristique, les moyens (42) d'enregistrement et de mesures d'échos comprennent un enregistreur à bande magnétique relié au récepteur (8) et à l'horloge (20) et des moyens (43) pour évaluer les décalages de phases introduits à l'enregistrement des signaux de sortie du récepteur, par suite des fluctuations du positionnement de la bande (44) sous la tête d'écriture-lecture (45) de l'enregistreur.

Enfin, selon une autre caractéristique, les moyens (43) pour évaluer les décalages de phases comprennent un circuit d'inscription simultanée des échos reçus et de signaux de référence de phases, sur deux pistes différentes de la bande (44).

D'autres caractéristiques et avantages de l'invention ressortiront encore de la description qui va suivre, donnée à titre purement illustratif, en référence aux dessins annexés, dans lesquels:

— la figure 1 est un schéma par blocs, du sondeur de l'invention, et
— la figure 2 est un diagramme des impulsions électromagnétiques émises simultanément en mode rampe et en mode Doppler.

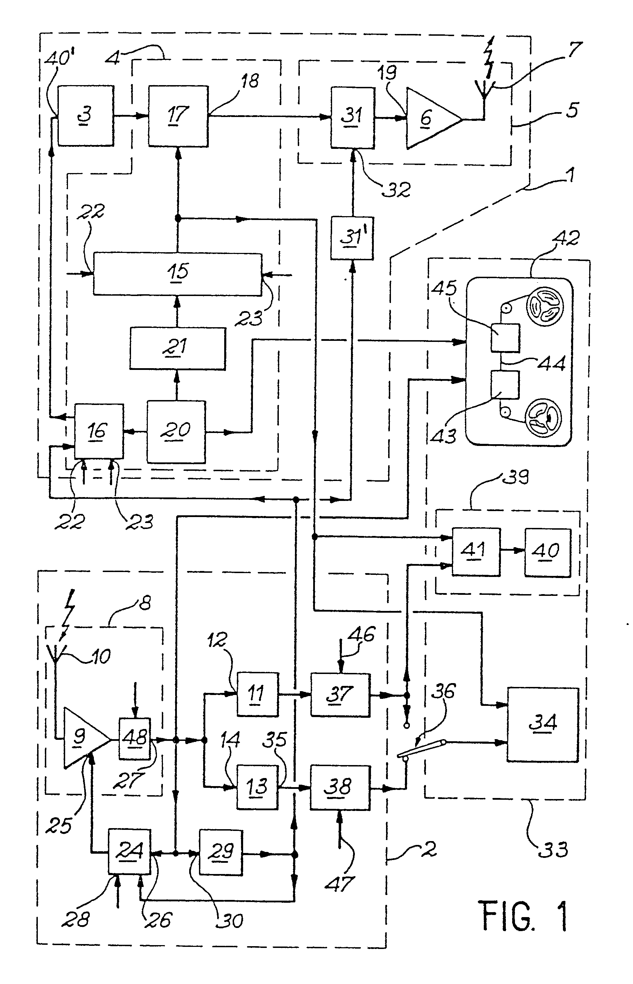

En référence à la figure 1, on a représenté schématiquement un sondeur conforme à l'invention et permettant la détection et la mesure de phénomènes relatifs au globe terrestre et à son environnement. Ce sondeur comprend une voie 1 d'émission d'ondes électromagnétiques, en direction du phénomène à étudier, et une voie 2 de réception des échos de ces ondes sur ce phénomène. La voie d'émission 1 comprend des moyens 3 pour produire des ondes électromagnétiques entretenues à fréquences fixes réglables (mode cohérent) et à fréquences progressives réglables selon une rampe de fréquence (mode rampe). Les moyens 3 peuvent être constitués, par exemple, par un générateur de signaux sinusoïdaux à haute fréquence; les fréquences (mode cohérent et mode rampe) de signaux délivrés par ce générateur sont réglables par des signaux de commande parvenant à une entrée 40 du générateur. Cette voie d'émission comprend également des moyens 4, pour moduler ces ondes entretenues par des impulsions à récurrence variable.

L'émetteur 5 reçoit ces ondes électromagnétiques ainsi modulées; cet émetteur peut être constitué de manière connue, par un amplificateur 6 dont la sortie est reliée à une antenne d'émission 7. La voie 2 de réception comprend un récepteur 8 constitué, par exemple, par un amplificateur 9 dont l'entrée est reliée à une antenne de réception 10. Ce récepteur présente, de manière connue, des moyens de réglage et d'accord (non représentés), correspondant respectivement à chacune des fréquences de réception; des moyens 11, dont une entrée 12 est connectée en sortie du récepteur, permettent de détecter les phases des échos résultant des impulsions d'ondes électromagnétiques à fréquences fixes réglables, du mode cohérent. De la même manière des moyens 13, dont une entrée 14 est connectée en sortie du récepteur, permettent de détecter les amplitudes des échos résultant des impulsions d'émission d'ondes électromagnétiques à fréquences progressives réglables, du mode rampe. Les moyens 4 qui permettent de moduler les ondes électromagnétiques du générateur 3 par des impulsions à récurrence variable, comprennent un générateur 15, d'impulsions à récurrence variable, de forme gaussienne, donnant accès à des informations relatives à la pente de l'ionogramme, lorsque le sondeur est utilisé pour l'étude de l'ionosphère; la sortie de ce générateur est reliée à une entrée d'un modulateur 17, dont une autre entrée est reliée à la sortie du générateur d'ondes électromagnétiques 3. La sortie 18 du modulateur 17 est reliée à l'entrée 19 de l'émetteur 5. Le générateur 15 est bien entendu synchronisé à partir d'une horloge 20, par l'intermédiaire d'un circuit logique de synchronisation 21. Ce circuit logique permet de régler la largeur des impulsions modulantes à récurrence variable. Le circuit 16, représenté sur la figure, est constitué de manière connue et permet le choix du mode de fonctionnement (rampe ou fréquence cohérente), du générateur 3. Bien entendu, la fréquence de base de chaque rampe de fréquences de l'onde électromagnétique d'émission, peut être commandée par des signaux parvenant à une entrée 22 du circuit 16, tandis que les fréquences fixes peuvent être commandées par des signaux parvenant à une entrée 23 du circuit 16. Ce sondeur comprend également un dispositif 24, de commande automatique de gain, dont une sortie est reliée à une entrée de commande de gain 25, du récepteur 8; l'entrée 26 de ce dispositif de commande automatique de gain est reliée à la sortie 27 du récepteur 8, tandis qu'une autre entrée 28 reçoit une tension de consigne permettant de fixer le gain du récepteur pour chaque canal de fréquence de réception en fonction du niveau admissible des perturbations sur ce canal, avant toute émission. Une détecteur de seuil 29 dont une entrée 30 est reliée à la sortie 27 du récepteur, permet de commander la voie d'émission de manière à autoriser ou refuser l'émission sur la fréquence de chaque canal, en fonction d'un seuil prédéterminé d'amplitude des perturbations sur chacun des canaux de réception. Cette commande peut être réalisée par l'intermédiaire d'une porte analogique 31; cette porte agit sur l'entrée de commande 32 de l'amplificateur 6, de manière à bloquer l'émission des ondes électromagnétiques modulées, lorsque des perturbations telles qu'un bruit de fond ou des signaux parasites dépassent un seuil prédéterminé d'amplitude, jugé inacceptable pour effectuer des mesures correctes. Le dispositif comprend en outre des moyens 33 d'enregistrement des échos, connectés aux sorties des moyens de détection de phases 11 et des moyens de détection d'amplitudes 13. Ces moyens d'enregistrement comprennent un oscilloscope 34 dont le circuit de commande de brillance du spot non représenté sur la figure et constitué de manière connue, est commandé par les sorties des moyens de détection d'amplitudes et de phases 13 et 11. Le circuit de balayage de cet oscilloscope est synchronisé par les impulsions délivrées par les générateurs d'impulsions de récurrence variable 15. Un commutateur 36, à deux positions, permet de visualiser, soit les variations d'amplitudes des échos détectés par le détecteur 13, soit les variations des phases des échos détectés par le détecteur 11. Cet oscilloscope est un oscilloscope à mémoire et il permet également d'obtenir le temps de propagation de groupe, des échos. Les échos provenant de l'amplificateur 9 du récepteur 8, pourraient être affectés de rebonds qui, dans certains cas, présenteraient une amplitude importante, ce qui pourrait entraîner des détections de faux échos. Afin d'empêcher ces détections parasites, le sondeur comprend des filtres de Bessel 37, 38, à fréquence centrale réglable grâce à des signaux de commande parvenant à des entrées de commande 46, 47, de ces filtres. Ces filtres sont connectés entre les sorties des détecteurs 11, 13 et les entrées des moyens d'enregistrement et de mesure 33. Tous les filtres du récepteur, tels que le filtre 48, présentent des caractéristiques de phase le rendant apte à transmettre toutes les impulsions, sans déformations. En fait, le filtre 48 est interposé entre les entrées 12, 14 des détecteurs et la sortie du récepteur qui correspond à l'une des fréquence intermédiaires de celui-ci. Le sondeur comprend également des moyens d'enregistrement d'échos 39, connectés en sortie des moyens de détection de phases 11. Ces moyens sont constitués par un enregistreur 40 relié à la sortie du détecteur de phases 11 par l'intermédiaire d'un dispositif d'échantillonnage et de mémorisation 41. Cet enregistreur de type graphique par exemple, permet après échantillonnage des signaux de détection de phases provenant du détecteur 11 et représentant les variations des phases des échos reçus par le récepteur 8, de représenter graphiquement l'effet Doppler en fonction du temps. Enfin, les moyens d'enregistrement d'échos, connectés en sortie du récepteur 8, peuvent être constitués par un enregistreur 42 à bandes magnétiques 44, qui enregistre en outre les impulsions d'horloge de référence de fréquences. Cet enregistreur comprend des moyens 43 qui permettent d'évaluer les décalages de phases introduits par l'enregistreur, par suite des fluctuations du positionnement de la bande 44, sous la tête d'écriture-lecture 45 de l'enregistreur. Les signaux de sortie du récepteur 8 et de l'horloge 20, sont enregistrés sur des pistes cohérentes de la bande. L'une de ces pistes est destinée à l'enregistrement des signaux du récepteur, tandis que l'autre piste est destinée à l'enregistrement des signaux de référence, issue de l'horloge 20.

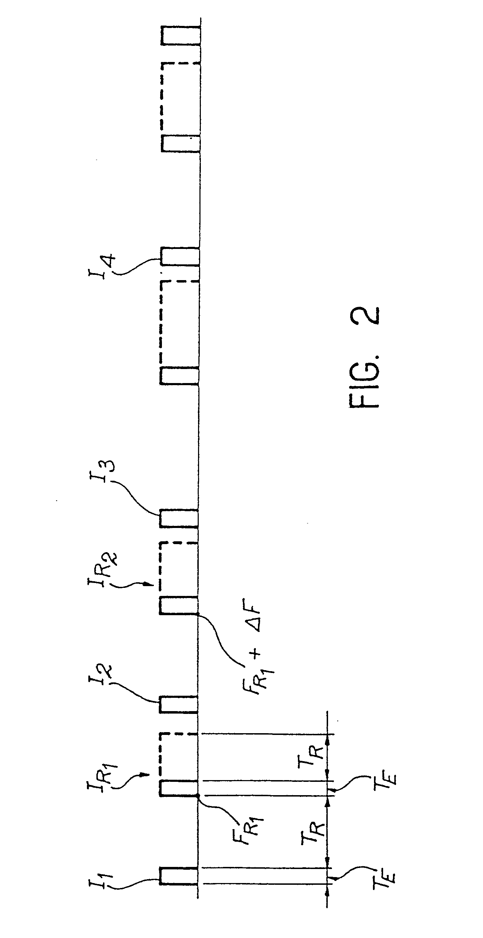

La figure 2, est un diagramme des impulsions d'ondes électromagnétiques modulées émises alternativement en mode rampe et en mode cohérent. Les impulsions à récurrence variable délivrées par les générateurs 15 et les ondes électromagnétiques à fréquences fixes réglables (mode cohérent) et à fréquences progressives réglables (mode rampe) parviennent au modulateur 17. Les impulsions d'ondes électromagnétiques à fréquences fixes, modulées (mode cohérent), sont représentées en $I_1$, $I_2$, $I_3$, $I_4$ et ont respectivement pour fréquences $F_1$, $F_2$, $F_3$, $F_4$; le nombre de ces fréquences a été limité à quatre, mais il est bien évident que ce nombre peut être inférieur ou supérieur. Les impulsions d'ondes électromagnétiques à fréquences progressives réglables, modulées (mode rampe) sont situées, canal après canal, entre les impulsions d'ondes modulées du mode cohérent et sont représentées schématiquement par des créneaux $I_{R1}$, $I_{R2}$, $I_{R3}$, $I_{R4}$; chaque créneau représente, en réalité, l'impulsion brève électromagnétique émise pendant le temps $T_E$, suivie du temps de réception $T_R$ correspondant. Le générateur 3 délivre des ondes électromagnétiques dont les fréquences varient selon une rampe de fréquences, à partir d'une fréquence $F_{R1}$ jusqu'à une fréquence $F_{R1} + n \Delta F$; dans cette expression $F_{R1}$ désigne la fréquence de base de la rampe de fréquences, tandis que $\Delta F$ représente le pas d'incrémentation des fréquences de la rampe; $n$ est un nombre entier fixé par l'opérateur en fonction des mesures à effectuer. Il est bien évident que le circuit logique 21 commandé par l'horloge 20 et qui permet de synchroniser le générateur 15, permet également de commander, par des connections non représentées, les différents éléments des voies d'émission et de réception, pour que la voie d'émission fonctionne pendant le temps $T_E$, tandis que la voie de réception est bloquée, et que la voie de réception fonctionne pendant le temps $T_R$, tandis que la voie d'émission est bloquée. Les ondes électromagnétiques délivrées par le générateur 3 sont donc modulées par les impulsions $I_1$, $I_{R1}$, $I_2$, $I_{R2}$, $I_3$ ... etc. Ces ondes modulées sont émises grâce à l'amplificateur 6 et à l'antenne 7, en direction d'une couche de l'ionosphère par exemple. Ces signaux sont réfléchis sous forme d'impulsions d'échos, en direction de l'antenne 10. A la réception, les échos sont détectés, soit en phases soit en amplitudes, puis sont enregistrés de manière à obtenir, grâce aux moyens d'enregistrement connectés au détecteur de phases et au détecteur d'amplitudes, les variations Doppler, les variations d'amplitudes et les temps de propagation de groupe des échos. Avant toute émission, dans une bande de fréquence correspondant à un canal donné du mode rampe, le détecteur de seuil 29 synchronisé par le circuit logique 21 par une connexion non représentée, permet d'autoriser ou de refuser l'émission sur la fréquence correspondant à ce canal, en fonction du niveau maximal admissible des perturbations. Si ce niveau ne dépasse pas le niveau admissible, le dispositif 24 de commande automatique de gain, commande le gain de l'amplificateur de réception 9, à partir d'une tension de consigne appliquée sur l'entrée 28, de manière que l'amplificateur 9 fonctionne avec un gain maximum. Si au contraire, le niveau maximal prédéterminé est atteint, le détecteur 29 peut bloquer la réception dans le canal de fréquence considéré par l'intermédiaire de la porte analogique 31 de la voie d'émission. Il est également possible, si ce niveau maximal est atteint, d'agir sur le circuit 16 pour provoquer une incrémentation de la fréquence des ondes délivrées par le générateur 3, pour tester le niveau des perturbations dans un canal de fréquence proche. Les différents moyens d'enregistrement qui ont été décrits précédemment permettent d'enregistrer des ionogrammes par exemple, qui représentent, en fonction du temps et pour les fréquences connues des ondes modulées, les amplitudes, les temps de propagation de groupe et les variations de phases des échos des ondes modulées sur les couches ionosphériques. Ainsi, grâce à cet ionogramme, il est possible de déterminer le profil de la répartition de densité électronique des couches ionosphériques, en fonction de l'altitude. Les circuit 43 d'inscription simultanée, sur deux pistes, de signaux provenant du récepteur et de l'horloge permet de détecter, lorsque la bande magnétique défile sous la tête 45 d'écriture-lecture de l'enregistreur 42, les variations de phases parasites dues aux fluctuations de vitesse de la bande ainsi qu'au mauvais positionnement de celle-ci sous la tête d'écriture-lecture. Si l'une des pistes enregistre les signaux du récepteur et si l'autre piste enregistre les signaux en provenance de l'horloge, ces signaux d'horloge servent de référence temporelle pour l'enregistrement des signaux provenant du récepteur. Pour effectuer une correction des variations parasites de phases introduites par l'enregistreur, il suffit d'enregistrer, pendant le temps d'émission, les signaux d'horloge sur la piste portant les informations Doppler issues du récepteur. Ainsi, lorsque la bande est mal positionnée, il est possible de connaître les phases parasites dues à ces perturbations.

Il est bien évident que le sondeur qui vient d'être décrit et qui est supposé appliqué à l'étude de l'ionosphère, peut également être appliqué à l'étude d'autres phénomènes intéressant la globe terrestre tels que par exemple, la détection de la houle sur les mers. Dans ce cas, la sondeur est pointé en direction de la houle et il permet de déterminer d'une part l'approche de celle-ci et d'autre part la vitesse ou les variations de vitesse de cette houle. Dans cette application, les moyens d'enregistrement permettent de relever ces différents paramètres.

## Revendications

1. Sondeur pour la détection et la mesure de phénomènes relatifs à l'environnement du globe terrestre, comprenant une voie (1) d'émission d'ondes électromagnétiques en direction du phénomène à détecter et à mesurer, et une voie (2) de réception des échos de ces ondes, sur ce phénomène,

— la voie d'émission (1) comprenant des moyens (3) reliés à une horloge (20) pour produire des ondes électromagnétiques entretenues, à fréquences réglables fixes et à fréquences réglables progressives selon une rampe de fréquences, des moyens (4) pour moduler les ondes entretenues à fréquences réglables fixes et à fréquences progressives réglables, par des impulsions de récurrence réglable, de sorte qu'après modulation, les impulsions d'ondes entretenues à fréquences progressives réglables sont intercalées entre les impulsions d'ondes entretenues à fréquences fixes réglables, et un émetteur (5) émettant les impulsions d'ondes électromagnétiques ainsi modulées, les moyens de modulation (4) comprenant un générateur (15) d'impulsions de forme gaussienne, à récurrence réglable, dont une sortie est reliée à une entrée d'un modulateur (17) qui reçoit les ondes électromagnétiques sur une autre entrée, une sortie de ce modulateur étant reliée à une entrée de l'émetteur (5), et un circuit logique (21) de synchronisation du générateur (15),

— la voie de réception comprenant un récepteur (8) recevant les impulsions échos des impulsions d'émission renvoyées par le phénomène et présentant un canal (10) de réception à fréquence d'accord réglable, des moyens (11) dont une entrée est connectée en sortie du récepteur (8) pour détecter par effet Doppler les phases des impulsions échos des impulsions d'émission d'ondes entretenues à fréquences fixes réglables, et des moyens (13) dont une entrée est connectée en sortie du récepteur (8) pour détecter les amplitudes des impulsions d'échos, la voie de réception (2) comprenant en outre un dispositif (24) de commande automatique de gain en fonction du niveau des perturbations mesuré sur l'entrée du récepteur, à la fréquence de fonctionnement, une sortie de ce dispositif étant reliée à une entrée de commande du gain du récepteur (8), une entrée de ce dispositif étant reliée à la sortie du récepteur, tandis qu'une autre entrée (28) de ce dispositif reçoit une tension de consigne pour fixer le gain du récepteur pour chaque canal de fréquence progressive réglable, en fonction du niveau des perturbations sur chaque canal, sondeur caractérisé en ce que la voie de réception comprend en outre un détecteur de seuil (29) dont l'entrée est reliée à la sortie du récepteur, de manière à commander l'émetteur pour autoriser ou refuser l'émission sur la fréquence correspondant à chaque canal, en fonction du niveau maximal admissible de perturbations, et des moyens (16) pour incrémenter ou décrémenter, lorsque l'émission est refusée, la valeur de la fréquence progressive réglable d'une quantité inférieure au pas de fréquence de ladite rampe, ce sondeur comprenant en outre des moyens (39) d'enregistrement des variations de phases des échos, reliés au générateur (15) et aux moyens de détection de phases (11), par l'intermédiaire d'un premier filtre (37), des moyens (42) d'enregistrement des échos, reliés au récepteur (8), et des moyens (34) d'enregistrement et de mesures des amplitudes, des phases ou du temps de propagation de groupe des impulsions d'échos, reliés soit aux moyens de détection de phases (11), par l'intermédiaire du premier filtre (37), soit aux moyens de détection (13) d'amplitudes, par l'intermédiaire d'un second filtre (38), les voies d'émission et de réception agissant dans la bande des radiofréquences entre 200 KHz et 30 MHz.

2. Sondeur selon la revendication 1, caractérisé en ce que les moyens (34) d'enregistrement et de mesure des amplitudes, des phases ou du temps de propagation de groupe, comprennent un oscilloscope (34) dont le circuit de brillance du spot est commandé par une sortie des moyens de détection (11, 13) et dont le circuit de balayage est synchronisé par les impulsions délivrées par le générateur d'impulsions à récurrence réglable (15).

3. Sondeur selon la revendication 2, caractérisé en ce que ledit oscilloscope est à mémoire.

4. Sondeur selon la revendication 1, caractérisé en ce qu'il comprend en outre, au moins un filtre de Bessel (48) à fréquence centrale réglable, connecté entre la sortie du récepteur (8) et les entrées des moyens de détection (11, 13), lesdits premier et second filtres (37, 38) étant des filtres de Bessel, le récepteur comprenant des filtres présentant des caractéristiques le rendant apte à transmettre toutes les impulsions sans déformation.

5. Sondeur selon la revendication 4, caractérisé en ce que les moyens (39) d'enregistrement et de mesures des phases des impulsions d'échos comprennent un enregistreur (40) relié aux moyens de détection de phases (11) et au générateur (15) par l'intermédiaire d'un dispositif (41) d'échantillonnage et de mémorisation des signaux de sortie de ces moyens de détection de phases.

6. Sondeur selon la revendication 4, caractérisé en ce que les moyens (42) d'enregistrement et de mesures d'échos comprennent un enregistreur à bande magnétique relié au récepteur (8) et à l'horloge (20), et des moyens (43) pour évaluer les décalages de phases introduits à l'enregistrement des signaux de sortie du récepteur, par suite des fluctuations du positionnement de la bande (44) sous la tête d'écriture-lecture (45) de l'enregistreur.

7. Sondeur selon la revendication 6, caractérisé en ce que les moyens (43) pour évaluer les décalages de phases comprennent un circuit d'inscription simultanée des impulsions échos reçues et de signaux de référence de phases, sur deux pistes différentes de la bande (44).

**Patentansprüche**

1. Sondiergerät zum Bestimmen und Messen relativer Phänomene in der Umgebung des Erdballs mit einem Sendekanal (1) für elektromagnetische Wellen in Richtung zu dem zu bestimmenden und zu messenden Phänomen, und einem Empfangskanal (2) für Echos dieser Wellen an diesem Phänomen,

— wobei der Sendekanal (1) mit einem Taktgeber (20) verbundene Mittel (3) zum Erzeugen kontinuierlicher, elektromagnetischer Wellen mit fest einstellbaren Frequenzen und mit entsprechend einer Frequenzrampe fortschreitend einstellbaren Frequenzen, Mittel (4) zum Modulieren der kontinuierlichen Wellen mit fest einstellbaren Frequenzen und mit fortschreitend einstellbaren Frequenzen mit einstellbarer Impulsfolge derart, daß nach der Modulation die Impulse der kontinuierlichen Wellen mit fortschreitenden, einstellbaren Frequenzen zwischen die Impulse der kontinuierlichen Wellen mit fest einstellbaren Frequenzen eingeschoben sind, und einen Sender (5) aufweist, der die Impulse der derart modulierten elektromagnetischen Wellen aussendet, wobei die Modulationsmittel (4) einen Gauss-Impulsgenerator (15) mit einstellbarer Folge, dessen einer Ausgang mit einem Eingang eines Modulators (17) verbunden ist, der die elektromagnetischen Wellen an einem anderen Eingang erhält, wobei ein Ausgang dieses Modulators mit einem Eingang des Senders (5) verbunden ist, und einen logischen Schaltkreis (21) zur Synchronisation des Generators (15) aufweisen,

— wobei der Empfangskanal einen Empfänger (8), der die Echoimpulse der von dem Phänomen zurückgeworfenen Sendeimpulse empfängt und einen Empfangskanal (10) mit einstellbarer Frequenzabstimmung aufweist, Mittel (11), deren einer Eingang mit dem Ausgang des Empfängers (8) verbunden ist, um durch Doppler-Effekt die Phasen der Echoimpulse der Sendeimpulse der kontinuierlichen Wellen mit fest einstellbaren Frequenzen zu erfassen, und Mittel (13) umfaßt, von denen ein Eingang mit dem Ausgang des Empfängers (8) verbunden ist, um die Amplituden der Echoimpulse festzustellen, wobei der Empfangskanal (2) ferner eine Einrichtung (24) zur automatischen Steuerung der Verstärkung als Funktion des am Eingang des Empfängers gemessenen Störpegels auf der Betriebsfrequenz aufweist, wobei ein Ausgang dieser Einrichtung mit einem Steuereingang für die Verstärkung des Empfängers (8) verbunden ist, ein Eingang dieser Einrichtung mit dem Ausgang des Empfängers verbunden ist, während ein weiterer Eingang (28) dieser Einrichtung eine Sollspannung erhält, um die Verstärkung des Empfängers für jeden Kanal der fortschreitend einstellbaren Frequenz als Funktion des Störungspegels auf jeden Kanal festzulegen, dadurch gekennzeichnet, daß der Empfangskanal ferner einen Schwellendetektor (29), dessen Eingang mit dem Ausgang des Empfängers derart verbunden ist, daß der Sender gesteuert wird, das Aussenden auf der jedem Kanal entsprechenden Frequenz als Funktion des maximal zulässigen Störungsniveaus zuzulassen oder zu verhindern, und Mittel (16) umfaßt, um den Wert der fortschreitend einstellbaren Frequenz um eine kleinere Größer als den Frequenzschritt der Rampe zu erhöhen oder zu verringern, wenn das Aussenden verhindert ist, daß das Sondiergerät ferner Aufzeichnungsmittel (39) für Phasenänderungen, die mit dem Generator (15) und über ein erstes Filter (37) mit Phasenerfassungsmitteln (11) verbunden sind, mit dem Empfänger (8) verbundene Aufzeichnungsmittel (42) für die Echos und Mittel (34) zum Aufzeichnen und Messen der Amplituden, der Phasen oder der Laufzeit der Gruppe von Echoimpulsen aufweist, die entweder mit dem Phasenerfassungsmitteln (11) über das erste Filter (37) oder mit den Amplitudenerfassungsmittelnüber ein zweites Filter (38) verbunden sind, wobei die Sende- und Empfangskanäle in dem Radiofrequenzband zwischen 200 KHz und 30 MHz betrieben werden.

2. Sondiergerät nach Anspruch 1, dadurch gekennzeichnet, daß die Mittel (34) zum Aufzeichnen und zum Messen der Amplituden, der Phasen oder der Laufzeit der Gruppe ein Oszilloskop (34) umfassen, dessen Schaltkreis für die Fleckhelligkeit von einem Ausgang der Erfassungsmittel (11, 13) gesteuert wird und dessen Ablenkschaltkreis durch Impulse synchronisiert ist, die von dem Impulsgenerator mit einstellbarer Impulsfolge (15) geliefert werden.

3. Sondiergerät nach Anspruch 2, dadurch gekennzeichnet, daß das Oszilloskop ein Speicher ist.

4. Sondiergerät nach Anspruch 1, dadurch gekennzeichnet, daß es ferner wenigstens ein Bessel-Filter (48) mit einstellbarer Mittenfrequenz aufweist, das zwischen den Ausgang des Empfängers (8) und den Eingängen der Erfassungsmittel (11, 13) geschaltet ist, daß das erste und das zweite Filter (37, 38) Bessel-Filter sind, und daß der Empfänger Filter mit Kennlinien aufweist, so daß der Empfänger zur Übertragung aller Impulse ohne Verformung geeignet ist.

5. Sondiergerät nach Anspruch 4, dadurch gekennzeichnet, daß die Mittel (39) zur Aufzeichnung und zum Messen der Phasen der Echoimpulse ein Registriergerät (40) aufweisen, welches mit den Phasenerfassungsmitteln (11) und dem Generator (15) über eine Abtast- und Speichereinrichtung (41) für die Ausgangssignale dieser Phasenerfassungsmittel verbunden ist.

6. Sondiergerät nach Anspruch 4, dadurch gekennzeichnet, daß die Mittel (42) zum Aufzeichnen und Messen der Echosein Magnetbandaufzeichnungsgerät, welches mit dem Empfängers (8) und dem Taktgeber (20) verbunden ist, und Mittel (43) aufweisen, um die bei der Aufzeichnung der Ausgangssignale des Empfängers eingeführten Phasenverschiebungen aufgrund von Variationen der Lage des Bandes (44) an dem Aufzeichnungs-Wiedergabekopf (45) des Aufzeichnungsgerätes zu bestimmen.

7. Sondiergerät nach Anspruch 6, dadurch gekennzeichnet, daß die Mittel (43) zum Bestimmen der Phasenverschiebungen einen Schaltkreis zum gleichzeitigen Schreiben der erhaltenen Echoimpulse und von Phasenbezugssignalen auf zwei unterschiedlichen Spuren des Bandes (44) aufweisen.

**Claims**

1. Probe for the detection and measurement of environmental phenomena of the terrestrial globe, comprising an emission means (1) for electromagnetic waves in the direction of the phenomenon to be detected and measured, and a reception means (2) for the echoes of said waves from said phenomenon,

— the emission means (1) comprising a means (3) connected to a timer (20) to produce continuous electromagnetic waves, at controllable fixed frequencies and at frequencies that can be progressively controlled according to a frequency-ramp means (4) to modulate the continuous waves having fixed controllable frequencies and progressively-controllable frequencies, by pulses at controllable intervals, such that, after modulation, the pulses of the continuous waves of progressively controllable frequency are inserted between the pulses of the continuous waves of controllable fixed frequencies, and a transmitter (5) emitting the electromagnetic wave pulses thus modulated, the modulation means (4) comprising a generator (15) for pulses of Gaussian form, at a controllable timing, one output of which is connected to an input of a modulator (17) which receives the electromagnetic waves at another input, an output of said modulator being connected to an input of the transmitter (5), and a logic circuit (21) for synchronisation of the generator (15),

— the receiving means comprising a receiver (8) for the pulsed echoes of the emitted pulses reflected by the phenomenon, and comprising a reception channel (10) for receiving of a controllable frequency, detection means (11), one input of which is connected to the output of receiver (8) to detect by the Doppler effect the phase of the echo pulses from the pulses emitted continuously at controllable fixed frequency, and detection means (13), one input of which is connected to the output of receiver (8) for detecting the amplitudes of the echo pulses, the reception means (2) additionally comprising a device (24) for automatic gain control as a function of the level of perturbations received at the input of the receiver, at its operational frequency, an output of said device being connected to a gain-control input of receiver (8), an input of said device being connected to the output of the receiver, and another input (28) of said device receiving a control potential to fix the gain of the receiver for each channel of progressively-controllable frequency, as a function of the level of perturbations for each channel, the probe being characterized in that the reception means additionally comprises a threshold detector (29), one input of which is connected to the output of the receiver, whereby to command the transmitter to authorize or refuse transmission on the frequency corresponding to each channel, as a function of the maximum permissable level of perturbations, and means (16) to increase or decrease incrementally when transmission is refused, the value of the progressively controllable frequency by an amount less than the frequency steps of said frequency ramp, said probe additionally comprising means (39) for recording phase variations of the echoes, connected to generator (15) and to phase detection means (11), through a first filter (37), echo recording means (42) connected to receiver (8), and means (34) for the measurement and recording of the amplitudes, phases or times of propagation, of groups of echo pulses, connected either to phase detection means (11), through the first filter (37), or to amplitude detection means (13) through a second filter (38), the emission and reception means functioning within the radiofrequency band between 200 KHz and 30 MHz.

2. Probe according to claim 1, characterized in that the recording and measurement means (34) for the amplitudes, phases or times of propagation of the group, comprise an oscilloscope (34) whose spot brilliance circuit is·controlled by an output of the detection means (11, 13) and whose balancing circuit is synchronized by pulses delivered by the generator of pulses at controllable intervals (15).

3. Probe according to claim 2, characterized in that the oscilloscope has a memory.

4. Probe according to claim 1, characterized in that it additionally comprises at least one Bessel filter (48) of controllable central frequency, connected between an output of the receiver (8) and the inputs of the detection means (11, 13), said first and second filters (37, 38) being Bessel filters, the receiver comprising the filters having characteristics adapting it to transmit all the pulses without distortion.

5. Probe according to claim 4, characterized in that the recording and measurement means (39) for the phases of echo pulses comprise a recorder (40) connected to phase detection means (11) and to generator (15) through a means (41) for sampling and memorising the output signals of said phase detection means.

6. Probe according to claim 4, characterized in that the echo-measurement and recording means (42) comprise a magnetic tape recorder connected to receiver (8) and to timer (20), and means (43) for determining the phase shifts introduced in the recording of signals at the output of the receiver, from fluctuations of position of the tape (44) under the recording/playback head (45) of the recorder.

7. Probe according to claim 6, characterized in that the means (43) for determining the phase shifts comprise a circuit for simultaneous inscription of echo pulses received and phase reference signals on two different tracks of the tape (44).

FIG. 1

$I_1$  $I_{R_1}$  $I_2$  $I_{R_2}$  $I_3$  $I_4$

$F_{R_1}$

$F_{R_1} + \Delta F$

$T_R$  $T_R$

$T_E$  $T_E$

FIG. 2